# EUROPEAN PATENT APPLICATION

(11) **EP 4 726 505 A1**
(43) Date of publication of application: **15.04.2026**
(21) Application number: 24853314.3
(22) Date of filing: 30.05.2024
(51) Int. Cl.: G06F 1/3234

(54) **METHOD FOR ADJUSTING PERFORMANCE OF DEVICE, AND TERMINAL DEVICE**

(30) Priority: 11.08.2023 CN 202311021575
(71) Applicant: Huawei Technologies Co., Ltd., Shenzhen, Guangdong 518129 (CN)
(72) Inventor: WANG, Xiaokang, Shenzhen, Guangdong 518129 (CN); GUO, Chenyang, Shenzhen, Guangdong 518129 (CN); CHEN, Taiwen, Shenzhen, Guangdong 518129 (CN); LI, Haizhou, Shenzhen, Guangdong 518129 (CN)
(74) Representative: Pfenning, Meinig & Partner mbB
(86) International application number: PCT/CN2024/096394
(87) International publication number: WO 2025/035899

(57) **Abstract**

This application provides a method for adjusting device performance and a terminal device, and relates to the field of terminal technologies. The method includes: obtaining an input event for the terminal device; determining first energy performance corresponding to the input event; and adjusting an energy performance preference of a processor in the terminal device to the first energy performance preference. According to the technical solutions provided in this application, various input events can be identified more accurately, and performance of the processor can be adjusted for each input event, thereby fully identifying an instantaneous scenario of a user operation and improving user experience.

## Description

This application claims priority to Chinese Patent Application No. 2023110215757, filed with the China National Intellectual Property Administration on August 11, 2023 and entitled "METHOD FOR ADJUSTING DEVICE PERFORMANCE AND TERMINAL DEVICE", which is incorporated herein by reference in its entirety.

### TECHNICAL FIELD

This application relates to the field of terminals, and in particular, to a method for adjusting device performance and a terminal device.

### BACKGROUND

With continuous development of terminal technologies, application of various terminal devices has become increasingly widespread. Currently, to enhance portability, the terminal device is designed with a slim and lightweight body, resulting in a small battery capacity and a limited heat dissipation capability, which also imposes a great limitation on performance of the terminal devices. Therefore, how to improve performance experience of the terminal device while ensuring a long battery life has also drawn increasing attention.

In the conventional technology, a load status of a terminal device may be detected. A power consumption adjustment policy for a future time period is predicted based on a load status of the terminal device over a historical time period, and then power consumption of the terminal device in the future time period is adjusted according to the power consumption adjustment policy. However, the power consumption of the terminal device in the future time period can be adjusted only after the load status of the terminal device over the historical time period is collected, which results in a significant delay. In addition, the load status of the terminal device in history cannot accurately reflect a load status of the terminal device in the future time period, leading to poor adjustment effect of the power consumption adjustment policy.

### SUMMARY

In view of this, this application provides a method for adjusting device performance and a terminal device, so that various input events can be identified more accurately, and performance of a processor can be adjusted for each input event, thereby fully identifying an instantaneous scenario of a user operation and improving user experience.

To achieve the foregoing objective, according to a first aspect, an embodiment of this application provides a method for adjusting device performance. The method includes: obtaining an input event for a terminal device; determining a first energy performance preference corresponding to the input event; and adjusting an energy performance preference of a processor in the terminal device to the first energy performance preference.

In this embodiment of this application, when the input event for the terminal device is obtained, the first energy performance preference corresponding to the input event may be determined, and the energy performance preference of the processor in the terminal device is adjusted to the first energy performance preference, to indicate the processor to run based on the first energy performance preference, so that performance of the processor can meet a requirement for responding to the input event. In this way, the performance of the processor can be adjusted without depending on a load status of the processor or the terminal device, thereby improving efficiency and effect of adjusting the performance of the processor and responding to the input event. In addition, the performance of the processor can be adjusted for a specific input event, so that a manner of adjusting device performance is more accurate, and a waste of resources is reduced. For example, a PC device has features of a large display, a plurality of windows, and a plurality of tasks. According to the method for adjusting device performance provided in this embodiment of this application, various input events can be identified more accurately, and performance of the processor can be adjusted for each input event, thereby fully identifying an instantaneous scenario of a user operation and improving user experience.

The input event may be an event generated based on data and information that are input by an input device. The input device may be integrated into the terminal, or may be connected to the terminal device.

In some implementations, the input event may include an event type and device information. The event type may indicate a type of the input event, to distinguish between different input events. The device information may indicate the input device corresponding to the input event. In some implementations, the device information may include one or more of information such as a device identifier, a device type, a device ID, a device vendor, a software version, a hardware version, and a port number through which the input device is connected to the terminal device.

In some implementations, determining the first energy performance preference corresponding to the input event includes: determining at least one of the event type of the input event and the device information of the input device, where the input device corresponds to the input event; and determining the first energy performance preference based on at least one of the event type and the device information of the input device.

Various input events may be distinguished by using the event type and the corresponding input device. Therefore, the first energy performance preference corresponding to the input event is determined based on the event type and the input device, so that when the terminal device may include a plurality of input events, different first energy performance preferences can be determined for the plurality of input events.

In some implementations, the method further includes: determining a platform type of the processor; and determining the first energy performance preference based on at least one of the event type and the device information of the input device includes: determining the first energy performance preference based on the platform type and at least one of the event type and the device information of the input device.

Adjustment ranges of energy performance preferences corresponding to processors on different platforms may be different. Therefore, determining the first energy performance preference based on the event type, the device information of the input device, and the platform type of the processor can ensure a higher degree of matching between the first energy performance preference and the processor in the terminal device, thereby improving accuracy of the first energy performance preference and further enhancing accuracy of subsequent device performance adjustment.

In some implementations, before adjusting the energy performance preference of the processor in the terminal device to the first energy performance preference, the method further includes: obtaining a temperature of the processor; and updating the first energy performance preference based on the temperature to obtain an updated first energy performance preference, where when the temperature is lower, the updated first energy performance preference is smaller; and adjusting the energy performance preference of the processor in the terminal device to the first energy performance preference includes: adjusting the energy performance preference of the processor in the terminal device to the updated first energy performance preference.

A substantial increase in processor performance at a high temperature of the processor may reduce stability of the processor, while a minor increase in processor performance at a low temperature of the processor may fail to fully utilize potential of the processor. Therefore, to ensure stability of the processor and fully utilize performance of the processor, the first energy performance preference may be adjusted based on the temperature of the processor when the first energy performance preference is determined. In this way, when the temperature of the processor is higher, the updated first energy performance preference is also larger, thereby reducing an amplitude of performance improvement of the processor, however; and when the temperature of the processor is lower, the updated first energy performance preference is also smaller, thereby increasing an amplitude of performance improvement of the processor.

In some implementations, the method further includes: determining a first duration corresponding to the input event; and adjusting the energy performance preference of the processor to a second energy performance preference when the processor runs for at least the first duration based on the first energy performance preference, where the second energy performance preference is greater than the first energy performance preference. In some implementations, the second energy performance preference may be an energy performance preference in an original state, for example, may be an energy performance preference when the terminal device is in a standby state or an idle state.

In other words, the processor is indicated to run for at least the first duration based on the first energy performance preference, to enhance performance of the terminal device in a timely manner in response to the input event. In addition, when a duration for which the processor runs based on the first energy performance preference is greater than or equal to the first duration, the processor can be further indicated in a timely manner to run based on a higher second energy performance preference, thereby improving a battery life of the terminal device.

In some implementations, determining the first duration corresponding to the input event includes: determining at least one of the event type of the input event and the device information of the input device, where the input device corresponds to the input event; and determining the first duration based on at least one of the event type and the device information of the input device.

Various input events may be distinguished by using the event type and the corresponding input device. Therefore, the first duration corresponding to the input event is determined based on the event type and the input device, so that when the terminal device may include a plurality of input events, different first durations can be determined for the plurality of input events.

In some implementations, before adjusting the energy performance preference of the processor in the terminal device to the first energy performance preference, the energy performance preference of the processor is a third energy performance preference, and the third energy performance preference is greater than the first energy performance preference; and adjusting the energy performance preference of the processor to the second energy performance preference when the processor runs for at least the first duration based on the first energy performance preference includes: creating a timer when the processor starts to run based on the first energy performance preference; setting a target duration of the timer to the first duration; and adjusting the energy performance preference of the processor to the second energy performance preference if the timer expires.

In some implementations, before adjusting the energy performance preference of the processor in the terminal device to the first energy performance preference, the energy performance preference of the processor is a third energy performance preference, and the third energy performance preference is less than or equal to the first energy performance preference; and adjusting the energy performance preference of the processor to the second energy performance preference when the processor runs for at least the first duration based on the first energy performance preference includes: obtaining a timer, where the timer is a timer created when the processor starts to run based on the third energy performance preference; extending a target duration of the timer by the first duration; and adjusting the energy performance preference of the processor to the second energy performance preference if the timer expires.

When the third energy performance preference is greater than the first energy performance preference, the third energy performance preference may include the following several cases: In a possible case, currently, the energy performance preference of the processor is not adjusted in any manner, that is, the third energy performance preference may be an energy performance preference in an original state, for example, may be an energy performance preference when the terminal device is in a standby state or an idle state. In another possible case, currently, the energy performance preference of the processor may have already been adjusted at least once based on the input event or in any another manner, but is still greater than the first energy performance preference after the adjustment, that is, current performance of the processor still cannot meet a requirement of the current input event. Therefore, to improve efficiency and effect of responding to the input event, an energy performance preference of the processor in the terminal device may be adjusted to the first energy performance preference, to indicate the processor to start running based on the first energy performance preference, create the timer, and set the target duration of the timer to the first duration.

For example, both the third energy performance preference and the second energy performance preference are energy performance preferences in the original state. In this case, the processor of the terminal device may initially run based on the energy performance preference in the original state, and when the input event is detected, run for the first duration based on the first energy performance preference corresponding to the input event, and then restore to the energy performance preference in the original state.

For another example, the third energy performance preference is equal to the second energy performance preference, and neither the third energy performance preference nor the second energy performance preference is the energy performance preference in the original state. In this case, before the input event is detected, the energy performance preference of the processor has already been adjusted based on another event or scenario. When the input event is detected, the processor runs for the first duration based on the first energy performance preference corresponding to the input event, and then restores to a value before the adjustment based on the current input event, thereby ensuring that the processor can meet a requirement of the another event or scenario for the performance of the processor.

When the third energy performance preference may be greater than, less than, or equal to the first energy performance preference, currently, the energy performance preference of the processor may have been adjusted at least once based on the input event or in any another manner, and current performance of the processor can meet a requirement for responding to the input event. Therefore, only a duration for improving the performance of the processor needs to be extended.

In some implementations, before extending the target duration of the timer by the first duration, the method further includes: determining that the timer meets a latency condition, where the latency condition includes at least one of the following: a time interval from a current time to a most recent extension of the target duration in history is greater than or equal to a second duration; a quantity of times of extending the target duration is greater than or equal to a first value; or the target duration is greater than or equal to a third duration.

By determining whether the timer meets the latency condition, a duration for extending the processor to run at high performance can be accurately controlled. Fewer latency conditions may enable the processor to run for a longer time at high performance, so that the processor can respond to more input events in a timely manner. Conversely, more latency conditions may enable more accurate control of a duration for improving processor performance, and on the basis of responding to the input event in a timely manner, problems such as heat generation and poor battery life of the terminal device are alleviated.

When the latency condition includes that the time interval from the current time to the most recent extension of the target duration in history is greater than or equal to the second duration, a problem of frequently increasing the target duration of the timer may be alleviated, thereby alleviating problems such as heat generation and poor battery life resulting from this. For example, in a case in which a same or similar input event (that is, at least one of event types and device information of two input events is the same) is frequently obtained, a problem of repeated frequency boosting caused by the same or similar input event may be alleviated. The second duration may be preset. In some implementations, the second duration may be 1s. It may be understood that during actual application, the second duration may be another value.

When the latency condition includes that the quantity of times of extending the target duration is greater than or equal to the first value, a problem that the processor runs for an excessively long time at high performance due to an excessive quantity of latencies in a process of improving performance of the processor at a single time can be alleviated, thereby alleviating problems such as heat generation and poor battery life resulting from this. The first value may be preset.

When the target duration is greater than or equal to the third duration, a problem that the processor runs for an excessively long time at high performance in a process of improving the performance of the processor at a single time may be alleviated, thereby alleviating problems such as heat generation and poor battery life resulting from this. The third duration may be preset, and the third duration may be greater than the first duration. In some implementations, the third duration may be greater than or equal to a product of the first value and the first duration.

According to a second aspect, an embodiment of this application provides an apparatus for adjusting device performance. The apparatus includes:
an obtaining module, configured to obtain an input event for a terminal device;
a determining module, configured to determine a first energy performance preference corresponding to the input event; and
an adjustment module, configured to adjust an energy performance preference of a processor in the terminal device to the first energy performance preference.

According to a third aspect, an embodiment of this application provides a terminal device, including a memory and a processor. The memory is configured to store a computer program. The processor is configured to perform the method according to any one of the first aspect when invoking the computer program.

In some implementations, the terminal device is a personal computing device, a tablet device, or smart glasses.

In some implementations, when the terminal device is the personal computing device or the tablet device, an input device includes at least one of a keyboard, a touchpad, a mouse, and a touchscreen.

According to a fourth aspect, an embodiment of this application provides a chip system. The chip system includes a processor. The processor is coupled to a memory, and the processor executes a computer program stored in the memory, to implement the method according to any one of the first aspect.

The chip system may be a single chip or a chip module including a plurality of chips.

According to a fifth aspect, an embodiment of this application provides a computer-readable storage medium. The computer-readable storage medium stores a computer program. When the computer program is executed by a processor, the method according to any one of the first aspect is implemented.

According to a sixth aspect, an embodiment of this application provides a computer program product. When the computer program product is run on a terminal device, the terminal device is enabled to perform the method according to any one of the first aspect.

It may be understood that, for beneficial effects of the second aspect to the sixth aspect, reference may be made to related descriptions in the first aspect. Details are not described herein again.

### BRIEF DESCRIPTION OF DRAWINGS

FIG. 1 is a diagram of a structure of a terminal device according to an embodiment of this application;
FIG. 2 is a block diagram of a software structure of a terminal device according to an embodiment of this application;
FIG. 3 is a diagram of a structure of a touchpad according to an embodiment of this application;
FIG. 4 is a diagram of a use scenario of a terminal device according to an embodiment of this application;
FIG. 5 is a schematic flowchart of a method for adjusting device performance according to an embodiment of this application;
FIG. 6 is a schematic flowchart of a method for adjusting device performance according to an embodiment of this application;
FIG. 7 is a schematic flowchart of a method for adjusting device performance according to an embodiment of this application; and
FIG. 8 is a schematic flowchart of a method for adjusting device performance according to an embodiment of this application.

### DESCRIPTION OF EMBODIMENTS

The method for adjusting device performance provided in embodiments of this application may be applied to a terminal device such as a personal computing device (personal computer, PC), a notebook computer, an ultra-mobile personal computer (ultra-mobile personal computer, UMPC), a netbook, a personal digital assistant (personal digital assistant, PDA), a tablet computer, a mobile phone, a wearable device, or an (augmented reality, AR)/virtual reality (virtual reality, VR) device. A specific type of the terminal device is not limited in embodiments of this application.

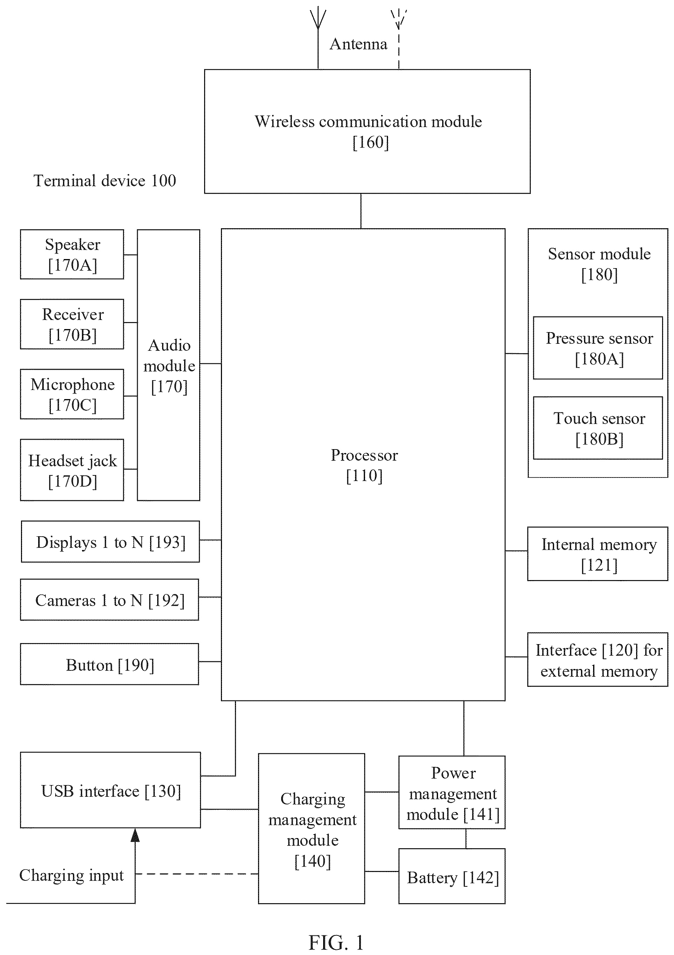

FIG. 1 is a diagram of a structure of a terminal device 100 according to this application. The terminal device 100 may include a processor 110, an interface 120 for external memory, an internal memory 121, a universal serial bus (universal serial bus, USB) interface 130, a charging management module 140, a power management module 141, a battery 142, an antenna, a wireless communication module 160, an audio module 170, a speaker 170A, a receiver 170B, a microphone 170C, a headset jack 170D, a sensor module 180, a button 190, a camera 192, a display 193, and the like.

It may be understood that a structure shown in this embodiment of this application does not constitute a specific limitation on the terminal device 100. In some other embodiments of this application, the terminal device 100 may include more or fewer components than those shown in the figure, or some components may be combined, or some components may be split, or a different component arrangement may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, and/or a baseband processor. Different processing units may be independent components, or may be integrated into one or more processors.

The controller may be a nerve center and a command center of the terminal device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This reduces repeated access and reduces waiting time of the processor 110, thereby improving system efficiency.

In some embodiments, the processor 110 may include one or more interfaces. The interface may include an inter-integrated circuit (inter-integrated circuit, I2C) interface, a USB interface, and/or a network interface.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to a touch sensor, a charger, a flash, the camera 192, and the like through different I2C bus interfaces. For example, the processor 110 may be coupled to the touch sensor through the I2C interface, so that the processor 110 communicates with the touch sensor through the I2C bus interface, to implement a touch function of the terminal device 100.

The USB interface 130 is an interface that conforms to a USB standard specification, and may be specifically a mini USB interface, a micro USB interface, a USB type-C interface, or the like. The USB interface 130 may be used to connect to the charger to charge the terminal device 100, or may be used to transmit data between the terminal device 100 and a peripheral device. For example, the USB interface 130 may be configured to connect to an input device such as a mouse, a keyboard, a microphone, or a touchpad.

The network interface may be used as a connection point between the terminal device 100 and a private network or a public network, and may be used by the terminal device 100 to access a network. For example, the network interface may implement communication between the terminal device 100 and another device in a network. For example, the network interface may include an RJ-45 interface, an RJ-11 interface, and an optical fiber interface.

It may be understood that an interface connection relationship between the modules shown in this embodiment of this application is merely an example for description, and constitutes no limitation on the structure of the terminal device 100. In some other embodiments of this application, the terminal device 100 may alternatively use an interface connection manner different from that in the foregoing embodiment, or a combination of a plurality of interface connection manners.

A wireless communication function of the terminal device 100 may be implemented through the antenna, the wireless communication module 160, the modem processor, the baseband processor, and the like.

The terminal device 100 implements a display function by using the GPU, the display 193, the application processor, and the like. The GPU is a microprocessor for image processing, and is connected to the display 193 and the application processor. The GPU is configured to perform mathematical and geometric computation for graphic rendering. The processor 110 may include one or more GPUs, which execute program instructions to generate or change display information.

The terminal device 100 may implement a photographing function by using the ISP, the camera 192, the video codec, the GPU, the display 193, the application processor, and the like.

The terminal device 100 may implement an audio function, for example, music playing and recording, by using the audio module 170, the speaker 170A, the receiver 170B, the microphone 170C, the headset jack 170D, the application processor, and the like.

The internal memory 121 may be configured to store computer-executable program code. The executable program code includes instructions. The processor 110 runs the instructions stored in the internal memory 121, to perform various function applications and data processing of the terminal device 100. The internal memory 121 may include a program storage area and a data storage area. The program storage area may store an operating system, an application (for example, a performance adjustment application) required by at least one function, and the like. The data storage area may store data (for example, application data of a performance adjustment application) created during use of the terminal device 100, and the like.

The pressure sensor 180A is configured to sense a pressure signal, and can convert the pressure signal into an electrical signal. When a touch operation is performed on the display 193, the terminal device 100 detects intensity of the touch operation through the pressure sensor 180A. The terminal device 100 may also calculate a touch position based on a detection signal of the pressure sensor 180A.

The touch sensor 180B may be disposed on the display 193, and the touch sensor 180B and the display 193 form a touchscreen, which is also referred to as a "touch screen". The touch sensor 180B is configured to detect a touch operation performed on or near the touch sensor 180B. The touch sensor 180B may transfer the detected touch operation to the application processor, to determine a type of a touch event. A visual output related to the touch operation may be provided through the display 193. In some other embodiments, the touch sensor 180B may alternatively be disposed on a surface of the terminal device 100 at a position different from that of the display 193.

The button 190 includes a power button, a volume button, and the like. The button 190 may be a mechanical button, or may be a touch button. The terminal device 100 may receive a button input, and generate a button signal input related to a user setting and function control of the terminal device 100. For example, the terminal device 100 may include a keyboard, and the keyboard may include a plurality of buttons 190.

It may be learned from FIG. 1 that the terminal device may include a core device such as a processor, and may include an external device such as an input device, an output device, and an external memory. In addition, it may be understood that, for different types of terminal devices 100, input devices, output devices, and external memories included in the terminal devices 100 may also be different.

The input device is a device that can input data and information to the terminal device 100, and may be used for information exchange between a user and the terminal device 100. In some implementations, the input device may provide an input event for the terminal device, to provide the data and the information for the terminal device 100 through the input event. For example, the terminal device 100 is a PC device, and the input device may include a mouse, a keyboard, a camera 192, a touchpad, a microphone 170C, a wireless communication module 160, various sensors, and the like. For example, the terminal device 100 is a mobile phone, and the input device may include a button, a camera 192, a touchpad, a microphone 170C, a wireless communication module 160, various sensors, and the like.

The input device is a device that can output data and information to the outside of the terminal device 100, and may be configured to respond to an input such as a user operation. For example, the antenna, the wireless communication module 160, the speaker 170A, the display 193, and the like in FIG. 1 may all be used as output devices.

When the terminal device 100 runs, the terminal device 100 may obtain an input event by using the input device, thereby obtaining data and information that are externally input, and then the processor responds to the input event, and processes the data and the information. Alternatively, the terminal device 100 may transfer a response to the input event to the outside by using the input device, thereby responding to the user or an external environment.

For example, the user takes a photo by using the terminal device 100. The user taps an icon of a camera application on the touchscreen. When the touch sensor 180B on the touchscreen receives a touch operation, the touch operation is processed into an input event (including information such as touch coordinates and a time stamp of the touch operation). The processor 110 identifies a control corresponding to the input event. The touch operation is a single-tap operation, and a control corresponding to the single-tap operation is a control of a camera application icon. Therefore, the camera 192 is started, a static image or a video is captured by using the camera 192, and an image shot by the camera 192 is displayed on the touchscreen.

It may be learned that when performance of the terminal device 100 (for example, the processor 110) increases, efficiency and accuracy of responding to or processing the input event are correspondingly improved. The foregoing example in which the user takes a photo by using the terminal device 100 is still used. Higher performance of the terminal device 100 (for example, the processor 110) indicates a higher speed of starting the camera 192 and displaying a photographing picture to the user through the touchscreen, thereby providing smoother photographing experience for the user.

A software system of the terminal device 100 may use a layered architecture, an event-driven architecture, a microkernel architecture, a micro service architecture, or a cloud architecture. In this embodiment of this application, an Android system of a layered architecture is used as an example to describe the software structure of the terminal device 100.

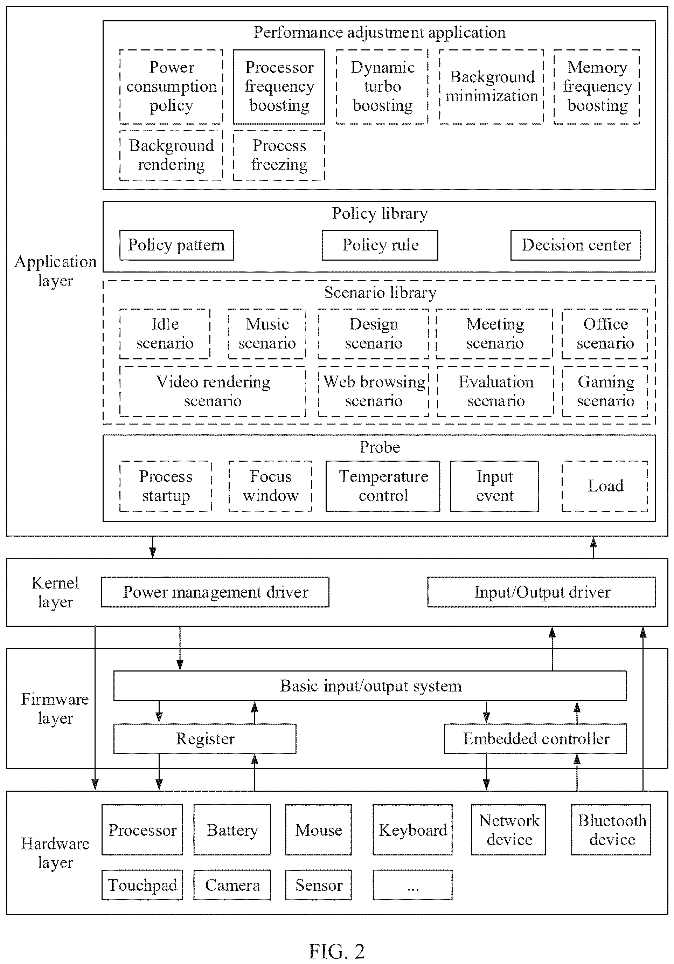

FIG. 2 is a block diagram of the software structure of the terminal device 100 according to this embodiment of this application.

In a layered architecture, software is divided into several layers, and each layer has a clear role and task. The layers communicate with each other through a software interface. In some embodiments, the software structure of the terminal device 100 includes an application layer, a kernel layer, and a firmware layer from top to bottom.

The application layer may include a series of application packages. For example, as shown in FIG. 2, the application layer may include a performance adjustment application, a policy library, and a probe. In some implementations, the application layer may further include a scenario library.

The probe may obtain various data such as events and/or messages from a bottom layer. The data may reflect a running status of the terminal device 100, thereby providing a basis and support for adjusting performance of the terminal device 100. For example, the probe includes a temperature control probe, and the temperature control probe may be configured to obtain temperatures of various components such as a processor. For example, the probe may include an input probe, and the input probe may be configured to obtain various input events of the terminal device 100, so that the terminal device 100 responds to the input events in a timely manner. For example, the probe may include a load probe, and the load probe may be configured to obtain a load status of the processor. For example, the probe may include a process startup probe, and the process startup probe may be configured to detect a started process. For example, the probe may include a focus window probe, and the focus window probe may be configured to obtain a focus window on a display.

The policy library may include a policy pattern, a policy rule, and a decision center for performance adjustment, so that a decision-making manner for determining a performance parameter can be provided for the performance adjustment application. For example, the policy library may indicate a trigger condition for using the method for adjusting device performance provided in this embodiment of this application. For example, the policy library may indicate to use a scope of data obtained from the probe, for example, determine a performance parameter only based on data of the input probe, or determine a performance parameter based on data of more probes such as the input probe, the temperature control probe, and the load probe. For example, the policy library may be used to identify one or more scenarios in the scenario library, and determine whether to adjust performance of the terminal device based on the one or more scenarios.

The scenario library may include one or more predefined scenarios. For example, the scenario library may include an idle scenario, a music scenario, a design scenario, a meeting scenario, an office scenario, a video rendering scenario, a web browsing scenario, an evaluation scenario, and a gaming scenario. For example, when the terminal device is in different scenarios, performance of the terminal device may be adjusted based on the scenario, to meet a performance requirement of the scenario. For example, when the terminal device is in the game scenario, the terminal device may be adjusted to high performance; and when the terminal device is in the idle scenario, the terminal device may be adjusted to low performance.

The performance adjustment application may determine and deliver a performance parameter based on data such as an input event obtained by the probe, to adjust performance of the terminal device 100. For example, the performance parameter may include an energy performance preference (energy performance preference, EPP) of the processor. The energy performance preference, also referred to as an energy efficiency preference, may be used to reflect a scheduling tendency of the processor. A smaller energy performance preference indicates that the processor tends to have higher performance, and a higher energy performance preference indicates that the processor tends to have lower power consumption. Therefore, the processor may be controlled to boost its frequency by setting a lower energy performance preference for the processor, and the processor may be controlled to reduce frequency by setting a higher energy performance preference for the processor. In some implementations, processors of different platform types may have different software and hardware structures. Therefore, when platform types of the processors differ, value ranges of energy performance preferences may also vary. For example, an energy performance preference adjustment range corresponding to the Intel^{®} platform may be 0 to 255, and adjustment range corresponding to the AMD^{®} platform may be 0 to 100. A platform type of the processor may be a software or hardware structure feature of the processor.

It may be understood that the performance adjustment application may further adjust performance of the terminal device in another manner. For example, the another manner may include one or more of the following: minimizing a window of the terminal device in the background (that is, background minimization as shown in FIG. 2), stopping rendering a window in the background (that is, background rendering as shown in FIG. 2), freezing a process in the background (that is, process freezing as shown in FIG. 2), dynamically adjusting power consumption of the terminal device based on load (that is, power consumption policy and dynamic turbo boosting as shown in FIG. 2), and increasing a memory read frequency (that is, memory frequency boosting as shown in FIG. 2).

It may be further understood that the application layer may further include another application, for example, an application such as music, games, or videos.

The kernel layer may include a device driver, and the device driver may be used as an interface between an upper-layer application and a hardware device. For example, the driver device may include input/output drivers such as a mouse driver, a keyboard driver, and a touchpad driver. The mouse driver may drive a mouse to operate, the keyboard driver may drive a keyboard to operate, and the touchpad driver may drive a touchpad to operate. For example, the device driver may include a power management driver (acpi.sys). The power management driver may be configured to manage a power supply of the terminal device 100, for example, configure a power mode, or send a performance parameter to the processor.

The firmware layer may include a basic input/output system (basic input/output system, BIOS), a register (model specific register, MSR), and an embedded controller (embed controller, EC).

The BIOS is a set of programs fixed on a motherboard of the terminal device, and stores the most important basic input/output routine of the terminal device 100, a power-on self-test routine, and a system boot routine. The BIOS can read and write specific system configuration information from and to a CMOS. The BIOS may provide the terminal device 100 with lowest-level and most direct hardware configuration and control.

The MSR may be used for communication between hardware and an operating system. For example, the MSR may include an MSR address corresponding to hardware. When the BIOS sends data such as an instruction to the hardware, the BIOS may write the data to the MSR address corresponding to the hardware through a serial management interface (serial management interface, SMI), to complete configuration of the hardware. For example, the MSR may be used for communication between a processor and an operating system. For example, the BIOS may write an energy performance preference to an MSR address corresponding to the processor, so that the processor increases or decreases a frequency based on the energy performance preference.

The EC may be configured to assist in managing an external device of the terminal device 100. For example, the external device may include an input device, an output device, an external memory, and the like. The input device is a device that can input data and information to the terminal device 100, and is used for information exchange between a user and the terminal device 100. For example, the terminal device 100 is a PC device, and the input device may include a mouse, a keyboard, a camera 192, a touchpad, a microphone 170C, a wireless communication module 160, various sensors, and the like. For example, the terminal device 100 is a mobile phone, and the input device may include a button, a camera 192, a touchpad, a microphone 170C, a wireless communication module 160, various sensors, and the like. For example, the EC may communicate with the BIOS through a communication bus such as an enhanced serial peripheral interface (enhanced serial peripheral interface, eSPI)/low pin count bus (low pin count Bus, LPC), and communicate with underlying hardware through a communication bus such as an I2C/platform environment control interface (platform environment control interface, PECI).

It may be understood that the external device may alternatively communicate with the BIOS or the kernel layer in the terminal device 100 in another manner. For example, the external device may alternatively communicate with the BIOS in the terminal device 100 through a communication bus such as a USB interface 130. Alternatively, a microcontroller unit (microcontroller unit, MCU) is disposed in the external device, so that the external device may communicate with the BIOS in the terminal device 100 by using the MCU.

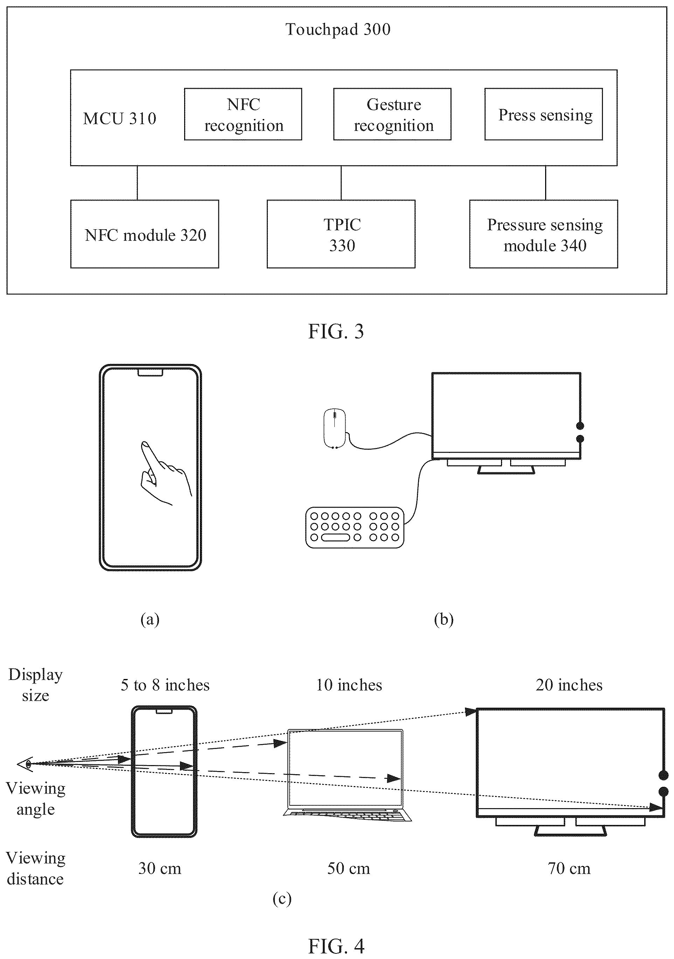

For example, as shown in FIG. 3, a touchpad 300 includes an MCU 310, a near field communication (near field communication, NFC) module 320, a touch panel driver integrated circuit (touch panel driver integrated circuit, TPIC) 330, and a pressure sensing module 340. For example, the MCU 310 may control the NFC module 320 to receive or send data, to identify another device close to the terminal device 100, perform data interaction with the another device, and the like. For example, the MCU 310 performs gesture recognition based on data collected by the TPIC 330, and/or performs press sensing based on data collected by the pressure sensing module 340, to determine a press position, a pressure magnitude, a press trajectory, and the like of the user on the touchpad 300. The MCU 310 may obtain an input event based on data collected by one or more of the NFC module 320, the TPIC 330, and the pressure sensing module 340, and send the obtained input event to the BIOS in the terminal device 100 through the I2C bus, so that the terminal device 100 obtains the input event.

It may be understood that during actual application, the structure shown in this embodiment of this application does not constitute a specific limitation on the touchpad 300. In some other embodiments of this application, the touchpad 300 may include more or fewer components than those shown in the figure, or some components may be combined, or some components may be split, or a different component arrangement may be used. The components shown in the figure may be implemented by hardware, software, or a combination of software and hardware.

To facilitate understanding of the technical solutions in embodiments of this application, the following first describes an application scenario of embodiments of this application.

With continuous development of terminal technologies, application of various terminal devices has become increasingly widespread. Currently, to enhance portability, the terminal device is designed with a slim and lightweight body, resulting in a small battery capacity and a limited heat dissipation capability, which also imposes a great limitation on performance of the terminal devices. When the performance of the terminal device is higher, a response delay to a user operation is smaller, and smoothness perceived by the user is better. A response to an input event is used as an example. When a response latency to the input event is less than 1 second, the user can better determine a causal relationship between the response and the input event, thereby facilitating smooth, effective, and controllable interaction between the user and the terminal device. When the latency is greater than or equal to 1s, the user may find it difficult to determine a causal relationship between the response and the input event, and consequently, the user has to wait and feels lag, or the user may fail to perceive the response due to reasons such as distraction.

In addition, an impact of a response delay of the terminal device to an input event on user experience is also related to a type of the terminal device.

FIG. 4 is a diagram of a use scenario of the terminal device according to an embodiment of this application.

Some terminal devices are small in size, and an input device and an output device are highly integrated. As shown in (a) in FIG. 4, the terminal device is a mobile phone, and includes a touchscreen. The touchscreen may be used as a display device to display a human-computer interaction interface, for example, animation effect, and may alternatively be used as an input device to receive a user operation such as touching and pressing of the user.

Some terminal devices are large in size, and an input device and an output device are separated. As shown in (b) in FIG. 4, the terminal device is a desktop computer or a notebook computer, and includes a mouse, a keyboard, and a display. The mouse and the keyboard are used only as input devices to receive user operations, and the display is used only as a display device to display a human-computer interaction interface. When the input device is separated from the output device, the user has a higher perceptual threshold for the response delay in human-computer interaction. The mouse has a higher requirement on control precision, and therefore, the terminal device needs to respond to various mouse operations of the user in a more timely and accurate manner.

With reference to (a), (b), and (c) in FIG. 4, from the mobile phone to the notebook computer and then to the desktop computer, a size of the display gradually increases, and a distance (that is, a viewing distance) between the display and the user also gradually increases. When the display is larger, the user is more sensitive to changes in the human-computer interaction interface or the like.

Therefore, how to improve performance experience of the terminal device while ensuring a long battery life has also drawn increasing attention.

In some implementations, the terminal device may predefine one or more focus windows. When detecting that the focus window is displayed, the terminal device determines a corresponding power consumption adjustment policy based on the focus window and current system load of the terminal device. However, due to a need to obtain system load of the terminal, device energy consumption adjustment may suffer from a considerable delay.

To resolve at least some of the foregoing technical problems, an embodiment of this application provides another technical solution for adjusting device performance. Specific embodiments are used below to describe in detail the technical solutions of this application. The following several specific embodiments may be combined with each other, and a same or similar concept or process may not be described repeatedly in some embodiments.

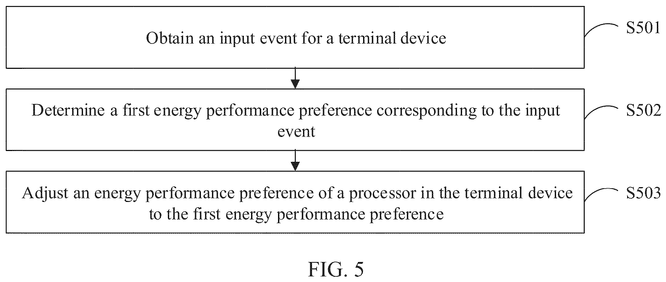

FIG. 5 is a flowchart of a method for adjusting device performance according to an embodiment of this application. It should be noted that the method is not limited to a specific sequence described in FIG. 5 and below. It should be understood that in another embodiment, a sequence of some steps in the method may be exchanged based on an actual requirement, or some steps in the method may be omitted or deleted. The method includes the following steps.

S501: A terminal device obtains an input event for the terminal device.

The input event may be an event generated based on data and information that are input by an input device. The input device may be integrated into the terminal device, or may be connected to the terminal device.

In some implementations, the input event may include an event type and device information. The event type may indicate a type of the input event, to distinguish between different input events. The device information may indicate the input device corresponding to the input event. In some implementations, the device information may include one or more of information such as a device identifier, a device type, a device ID, a device vendor, a software version, a hardware version, and a port number through which the input device is connected to the terminal device. It may be understood that during actual application, the device information may include more or less information that can be related to the input device.

In some implementations, the input event may include one or more messages, and each message may carry at least some information of the input event.

In some implementations, the input event of the input device may be obtained by using a probe. In some implementations, the probe may subscribe to the input event from a kernel layer (for example, a device driver of the input device). The kernel layer communicates with the input device through at least one of an I2C, a USB, and an MCU in the input device, and responds to the probe with the input event through a system callback function upon detecting the input event. It may be understood that during actual application, the input event may alternatively be obtained in another manner.

For example, the input device is a mouse or a touchpad, and the event type of the input event may include left-button single-click, left-button double-click, right-button single-click, scrolling, and dragging. When a message indicating left-button release is obtained, it may be determined that an input event of the left-button single-click type is obtained. When two messages indicating left-button press and two messages indicating left-button release are obtained, and a time interval between the two messages indicating left-button release is less than 500 ms (milliseconds), it may be determined that an input event of the left-button double-click type is obtained. When a message indicating right-button release is obtained, it may be determined that an input event of the right-button single-click type is obtained. When a message indicating left-button press and a message indicating a press-and-move operation of the mouse or the touchpad are obtained, it may be determined that an input event of the dragging type is obtained. When a message indicating mouse wheel (or referred to as a middle mouse button) scrolling is obtained, it may be determined that an input event of the mouse scrolling type is obtained.

For another example, the input device includes a keyboard, the event type of the input event may include character input and shortcut command input, and the shortcut command input may further include at least one of shortcut copy, shortcut paste, and shortcut save. When ten or more messages indicating pressing of a letter key (that is, a key whose virtual key code is 65 to 90) or a numeric key (that is, a key whose virtual key code is 48 to 57) are obtained within 2s, it may be determined that an input event of the character input type is obtained. Specifically, a message queue with a length of 10 may be created. Each time a message indicating character key press is received, it is determined whether a time interval between a last message and a first message in the message queue is less than 2s. If the time interval between the last message and the first message in the message queue is less than 2s, it is determined that an input event of the character input type is obtained; or otherwise, the first message is removed and an eleventh message is inserted. When a message indicating pressing of a Ctrl key is obtained and a message indicating pressing of an S key, a C key, or a V key is also obtained, it is determined that an input event of the shortcut command input type such as the shortcut copy, the shortcut paste, or the shortcut save is obtained. Specifically, the shortcut save is used as an example. When the Ctrl key is pressed, a flag corresponding to the Ctrl key may be set to true; and when the Ctrl key is released, the flag corresponding to the Ctrl key may be set to false. If the flag is true and a message indicating pressing of the S key (that is, a key with a virtual key code 83) is obtained, it is determined that an input event of the shortcut save type is obtained.

It may be understood that the event type of the input event and a related obtaining manner may be set in advance based on a specific type of the input device. In this embodiment of this application, only an example in which the input device is the mouse, the touchpad, or the keyboard is used to describe several possible input events and corresponding obtaining manners, but not limit the input event and the obtaining manner of the input event.

S502: The terminal device determines a first energy performance preference corresponding to the input event.

The first energy performance preference corresponding to the input event may be determined based on at least one of the input event, the input device corresponding to the input event, and the terminal device.

In some implementations, at least one of the event type of the input event and the device information of the input device may be determined, and the first energy performance preference is determined based on at least one of the event type and the device information of the input device. Various input events may be distinguished by using the event type and the corresponding input device. Therefore, the first energy performance preference corresponding to the input event is determined based on the event type and the input device, so that when the terminal device may include a plurality of input events, different first energy performance preferences can be determined for the plurality of input events.

In some implementations, based on the event type of the current input event and the device information of the input device, the first energy performance preference corresponding to the input event may be obtained from a correspondence between the event type, the device information of the input device, and the energy performance preference.

For example, the device information of the input device includes a device type. A correspondence between the event type, the device type, and the energy performance preference may be shown in Table 1.

**Table 1**

| Event type | Device type | Energy performance preference |
|---|---|---|
| Character input | Keyboard | 127 |
| Shortcut save | Keyboard | 84 |
| Shortcut paste | Keyboard | 127 |
| Left-button double-click | Mouse | 84 |
| Right-button single-click | Mouse | 0 |
| Scrolling | Mouse | 84 |
| Dragging | Mouse | 84 |
| Left-button double-click | Touchscreen | 84 |
| Right-button single-click | Touchscreen | 0 |
| Dragging | Touchscreen | 84 |
| Dragging | Touchpad | 84 |
| Left-button double-click | Touchpad | 84 |
| Right-button single-click | Touchpad | 0 |
| ... | ... | ... |

It may be understood that this embodiment of this application describes the correspondence between the event type, the device information of the input device, and the energy performance preference only by using Table 1, and does not constitute any limitation on the correspondence between the event type, the device information of the input device, and the energy performance preference, a value of the energy performance preference, the device information, or a storage manner of the correspondence between the event type, the device information of the input device, and the energy performance preference. It may be further understood that, for any two input events with different device types and/or different event types, energy performance preferences corresponding to the two input events may be the same or may be different. In some other implementations, an energy performance preference corresponding to the shortcut save and the keyboard may also be 127, an energy performance preference corresponding to the right-button single-click and the mouse may also be 84, an energy performance preference corresponding to the right-button single-click and a touchscreen icon may also be 84, and an energy performance preference corresponding to the right-button single-click and the touchpad may also be 84. In some other implementations, Table 1 may be split into more tables. For example, Table 1 may be split based on event types to obtain a plurality of tables, so that each table corresponds to one event type, and each table includes a correspondence between the device information of the input device and the energy performance preference. Alternatively, similarly, Table 1 may be split based on the device information to obtain a plurality of tables, so that each table corresponds to one type of device information, and each table includes a correspondence between the event type and the energy performance preference.

The terminal device may obtain and store the correspondence between the event type, the device information of the input device, and the energy performance preference in one or more of the following manners: In some implementations, the terminal device may receive the correspondence that is set by the user between the event type, the device information of the input device, and the energy performance preference. In some implementations, the terminal device may learn the energy performance preference configured by the user for the input event in a running process of the terminal device or in history, to obtain the correspondence between the event type, the device information of the input device, and the energy performance preference. In some implementations, the terminal device may obtain, from another external device, the configured correspondence between the event type, the device information of the input device, and the energy performance preference. Certainly, during actual application, the terminal device may alternatively obtain the correspondence between the event type, the device information of the input device, and the energy performance preference in another manner.

In some implementations, a platform type of a processor may be determined, and the first energy performance preference corresponding to the input event is determined based on the event type, the device information of the input device, and the platform type of the processor. Adjustment ranges of energy performance preferences corresponding to processors on different platforms may be different. Therefore, determining the first energy performance preference based on the event type, the device information of the input device, and the platform type of the processor can ensure a higher degree of matching between the first energy performance preference and the processor in the terminal device, thereby improving accuracy of the first energy performance preference and further enhancing accuracy of subsequent device performance adjustment. Certainly, the first energy performance preference may alternatively not be determined based on the platform type of the processor. For example, the first energy performance preference may be a value within an energy performance preference range shared by processors of a plurality of platform types.

In some implementations, based on the event type of the current input event, the device information of the input device, and the platform type, the first energy performance preference corresponding to the input event may be obtained from a correspondence between the event type, the device information of the input device, the platform type, and the energy performance preference.

For example, the device information of the input device includes a device type. A correspondence between the event type, the device information of the input device, the platform type, and the energy performance preference may be shown in Table 2. An energy performance preference adjustment range corresponding to a first platform may be 0 to 255, and an adjustment range corresponding to a second platform may be 0 to 100. For example, the first platform may be Intel^{®}, and the second platform may be AMD^{®}.

**Table 2**

| Event type | Device type | Energy performance preference | |
|---|---|---|---|
| | | First platform | Second platform |
| Character input | Keyboard | 127 | 50 |
| Shortcut save | Keyboard | 84 | 33 |
| Shortcut paste | Keyboard | 127 | 50 |
| Left-button double-click | Mouse | 84 | 33 |
| Right-button single-click | Mouse | 0 | 0 |
| Scrolling | Mouse | 84 | 33 |
| Dragging | Mouse | 84 | 33 |
| Left-button double-click | Touchscreen | 84 | 33 |
| Right-button single-click | Touchscreen | 0 | 0 |
| Dragging | Touchscreen | 84 | 33 |
| Dragging | Touchpad | 84 | 33 |
| Left-button double-click | Touchpad | 84 | 33 |
| Right-button single-click | Touchpad | 0 | 0 |
| ... | ... | ... | ... |

It may be understood that this embodiment of this application describes the correspondence between the event type, the device information of the input device, the platform type, and the energy performance preference only by using Table 2, and does not constitute any limitation on the correspondence between the event type, the device information of the input device, the platform type, and the energy performance preference, a value of the energy performance preference, the device information, or a storage manner of the correspondence between the event type, the device information of the input device, the platform type, and the energy performance preference. It may be further understood that, for any two input events with different device types and/or different event types, energy performance preferences corresponding to the two input events may be the same or may be different.

The terminal device may obtain and store the correspondence between the event type, the device information of the input device, the platform type, and the energy performance preference in one or more of the following manners: In some implementations, the terminal device may receive the correspondence that is set by the user between the event type, the device information of the input device, the platform type, and the energy performance preference. In some implementations, the terminal device may learn the energy performance preference configured by the user for the input event in a running process of the terminal device or in history, to obtain the correspondence between the event type, the device information of the input device, the platform type, and the energy performance preference. In some implementations, the terminal device may obtain, from another external device, the configured correspondence between the event type, the device information of the input device, the platform type, and the energy performance preference. Certainly, during actual application, the terminal device may alternatively obtain the correspondence between the event type, the device information of the input device, the platform type, and the energy performance preference in another manner.

In some implementations, a temperature of the processor may be further obtained, and the first energy performance preference is updated based on the temperature to obtain an updated first energy performance preference. When the temperature is lower, the updated first energy performance preference is smaller. A substantial increase in processor performance at a high temperature of the processor may reduce stability of the processor, while a minor increase in processor performance at a low temperature of the processor may fail to fully utilize potential of the processor. Therefore, to ensure stability of the processor and fully utilize performance of the processor, the first energy performance preference may be adjusted based on the temperature of the processor when the first energy performance preference is determined. In this way, when the temperature of the processor is higher, the updated first energy performance preference is also larger, thereby reducing an amplitude of performance improvement of the processor, however; and when the temperature of the processor is lower, the updated first energy performance preference is also smaller, thereby increasing an amplitude of performance improvement of the processor.

In some implementations, a reference temperature may be set, and the temperature of the processor is compared with the reference temperature. If the temperature is greater than the reference temperature, the first energy performance preference is increased; or if the temperature is less than the reference temperature, the first energy performance preference is decreased.

S503: The terminal device adjusts an energy performance preference of the processor in the terminal device to the first energy performance preference.

Because the first energy performance preference is determined based on the input event including the event type and the input device, the energy performance preference of the processor in the terminal device is adjusted to the first energy performance preference, or the processor is indicated to run based on the first energy performance preference, so that the processor can generate performance that meets processing of the input event, thereby improving response efficiency and effect of the input event.

In some implementations, the first energy performance preference may be sent to the processor by using a BIOS in a firmware layer, so that the processor may run based on the first energy performance preference. In some implementations, the first energy performance preference may be sent to the processor according to a platform type of the processor. If the processor is of the first platform type (for example, Intel^{®}), the first energy performance preference may be sent to the processor by using a dynamic optimization driver. If the processor is of the second platform type (for example, AMD^{®}), the first energy performance preference may be sent to the processor by using a power manager.

In some implementations, if the first energy performance preference is updated in the foregoing step, the energy performance preference of the processor in the terminal device may be adjusted to the updated first energy performance preference in S503.

In some implementations, a first duration corresponding to the input event may be determined. When the processor runs for at least the first duration based on the first energy performance preference, the energy performance preference of the processor is adjusted to a second energy performance preference, to indicate the processor to run based on the second energy performance preference. The second energy performance preference is greater than the first energy performance preference. In some implementations, when the processor starts to run based on the first energy performance preference, a timer may be created, and a target duration of the timer is set to the first duration. If the timer expires, the energy performance preference of the processor is adjusted to the first energy performance preference, to indicate the processor to run based on the second energy performance preference. The second energy performance preference may be any value greater than the first energy performance preference. In some implementations, the second energy performance preference may be an energy performance preference in an original state, for example, may be an energy performance preference when the terminal device is in a standby state or an idle state. In other words, the processor is indicated to run for at least the first duration based on the first energy performance preference, to enhance performance of the terminal device in a timely manner in response to the input event. In addition, when a duration for which the processor runs based on the first energy performance preference is greater than or equal to the first duration, the processor can be further indicated in a timely manner to run based on a higher second energy performance preference, thereby improving a battery life of the terminal device.

A manner of determining the first duration corresponding to the input event may be the same as or similar to a manner of determining the first energy performance preference corresponding to the input event. In some implementations, the first duration may be determined based on at least one of the event type and the device information of the input device. In some implementations, based on the event type of the input event and the device information of the input device, a corresponding frequency boost duration may be obtained as the first duration from a correspondence between the event type, the device information of the input device, and a frequency boost duration.

For example, the device information of the input device includes a device type. A correspondence between the event type, the device information, and the frequency boost duration may be shown in Table 3.

**Table 3**

| Event type | Device type | Frequency boost duration |
|---|---|---|
| Character input | Keyboard | 2s |
| Shortcut save | Keyboard | 2s |
| Shortcut paste | Keyboard | 2s |
| Left-button double-click | Mouse | 2s |
| Right-button single-click | Mouse | 2s |
| Scrolling | Mouse | 2s |
| Dragging | Mouse | 2s |
| Left-button double-click | Touchscreen | 2s |
| Right-button single-click | Touchscreen | 2s |
| Dragging | Touchscreen | 2s |
| Dragging | Touchpad | 2s |
| Left-button double-click | Touchpad | 2s |
| Right-button single-click | Touchpad | 2s |
| ... | ... | ... |

It may be understood that this embodiment of this application describes the correspondence between the event type, the device information of the input device, and the frequency boost duration only by using Table 3, and does not constitute any limitation on the correspondence between the event type, the device information of the input device, and the frequency boost duration, a value of the frequency boost duration, the device information, or a storage manner of the correspondence between the event type, the device information of the input device, and the frequency boost duration. For example, although Table 3 shows that different device types and different event types correspond to a same frequency boost duration, during actual application, for any two input events with different device types and/or different event types, frequency boost durations corresponding to the two input events may be different.

The terminal device may obtain and store the correspondence between the event type, the device information of the input device, and the frequency boost duration in one or more of the following manners: In some implementations, the terminal device may receive the correspondence that is set by the user between the event type, the device information of the input device, and the frequency boost duration. In some implementations, the terminal device may learn the frequency boost duration configured by the user for the input event in a running process of the terminal device or in history, to obtain the correspondence between the event type, the device information of the input device, and the frequency boost duration. In some implementations, the terminal device may obtain, from another external device, the configured correspondence between the event type, the device information of the input device, and the frequency boost duration. Certainly, during actual application, the terminal device may alternatively obtain the correspondence between the event type, the device information of the input device, and the frequency boost duration in another manner.

In this embodiment of this application, when the input event for the terminal device is obtained, the first energy performance preference corresponding to the input event may be determined, and the energy performance preference of the processor in the terminal device is adjusted to the first energy performance preference, to indicate the processor to run based on the first energy performance preference, so that performance of the processor can meet a requirement for responding to the input event. In this way, the performance of the processor can be adjusted without depending on a load status of the processor or the terminal device, thereby improving efficiency and effect of adjusting the performance of the processor and responding to the input event. In addition, the performance of the processor can be adjusted for a specific input event, so that a manner of adjusting device performance is more accurate, and a waste of resources is reduced. For example, a PC device has features of a large display, a plurality of windows, and a plurality of tasks. According to the method for adjusting device performance provided in this embodiment of this application, various input events can be identified more accurately, and performance of the processor can be adjusted for each input event, thereby fully identifying an instantaneous scenario of a user operation and improving user experience.

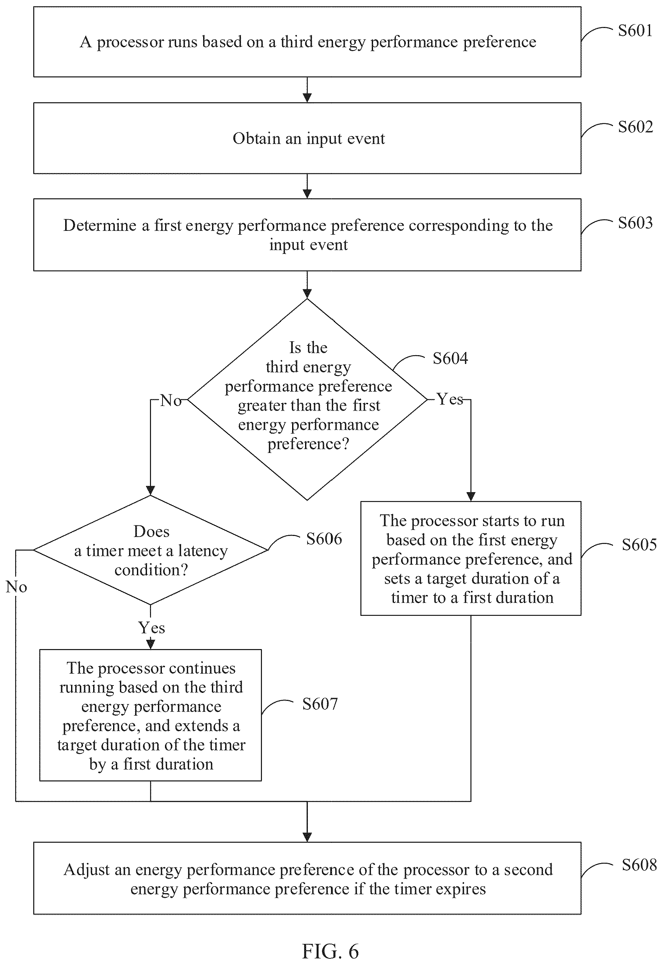

FIG. 6 is a flowchart of a method for adjusting device performance according to an embodiment of this application. It should be noted that the method is not limited to a specific sequence described in FIG. 6 and below. It should be understood that in another embodiment, a sequence of some steps in the method may be exchanged based on an actual requirement, or some steps in the method may be omitted or deleted. The method includes the following steps.

S601: A processor of a terminal device runs based on a third energy performance preference.

The third energy performance preference may be an energy performance preference prior to receiving an indication of running based on a first energy performance preference by the processor. In some implementations, the third energy performance preference may be an energy performance preference in an original state, for example, may be an energy performance preference when the terminal device is in a standby state or an idle state. The third energy performance preference may be greater than the first energy performance preference, and the third energy performance preference may be the same as the second energy performance preference. In some other implementations, the third energy performance preference may be an energy performance preference indicated to the processor based on another input event, and the third energy performance preference may be greater than, equal to, or less than the first energy performance preference.

S602: The terminal device obtains an input event.

It should be noted that a manner of performing S602 may be the same as or similar to the foregoing manner of performing S501. Details are not described herein again.

S603: The terminal device determines a first energy performance preference corresponding to the input event.

It should be noted that a manner of performing S603 may be the same as or similar to the foregoing manner of performing S502. Details are not described herein again.

S604: The terminal device determines whether the third energy performance preference is greater than the first energy performance preference. If the third energy performance preference is greater than the first energy performance preference, S605 is performed. If the third energy performance preference is less than or equal to the first energy performance preference, S606 is performed.

In some implementations, S606 may also be performed when the third energy performance preference is equal to the first energy performance preference, and S608 may be performed when the third energy performance preference is less than the first energy performance preference. That is, when current performance of the processor is higher than performance required for processing a current input event, a duration for improving the processor may not be extended.

S605: The processor starts to run based on the first energy performance preference, and sets a target duration of a timer to a first duration. Then, S608 may be performed.

If the current third energy performance preference of the processor is greater than the first energy performance preference, current performance of the processor cannot meet a requirement for responding to the input event. For example, the terminal device may process a standby state or a low-power state. Therefore, to improve efficiency and effect of responding to the input event, an energy performance preference of the processor in the terminal device may be adjusted to the first energy performance preference, to indicate the processor to start running based on the first energy performance preference, create the timer, and set the target duration of the timer to the first duration.

S606: The terminal device determines whether the timer meets a latency condition, and if the timer meets the latency condition, performs S607; or otherwise, performs S608.

If the current third energy performance preference of the processor is less than or equal to the first energy performance preference, the current performance of the processor can meet a requirement for responding to the input event. For example, the terminal device may improve the performance of the processor at least once based on another input event or another reason. Therefore, whether to extend a duration for which the processor runs at high performance can be determined based on whether the timer meets the latency condition.

The latency condition may be preset. In some implementations, the latency condition may include at least one of the following: a time interval from a current time to a most recent extension of the target duration in history is greater than or equal to a second duration; a quantity of times of extending the target duration is greater than or equal to a first value; or the target duration is greater than or equal to a third duration.

When the latency condition includes that the time interval from the current time to the most recent extension of the target duration in history is greater than or equal to the second duration, a problem of frequently increasing the target duration of the timer may be alleviated, thereby alleviating problems such as heat generation and poor battery life resulting from this. For example, in a case in which a same or similar input event (that is, at least one of event types and device information of two input events is the same) is frequently obtained, a problem of repeated frequency boosting caused by the same or similar input event may be alleviated. The second duration may be preset. In some implementations, the second duration may be 1s. It may be understood that during actual application, the second duration may be another value.

When the latency condition includes that the quantity of times of extending the target duration is greater than or equal to the first value, a problem that the processor runs for an excessively long time at high performance due to an excessive quantity of latencies in a process of improving performance of the processor at a single time can be alleviated, thereby alleviating problems such as heat generation and poor battery life resulting from this. The first value may be preset.

When the target duration is greater than or equal to the third duration, a problem that the processor runs for an excessively long time at high performance in a process of improving the performance of the processor at a single time may be alleviated, thereby alleviating problems such as heat generation and poor battery life resulting from this. The third duration may be preset, and the third duration may be greater than the first duration. In some implementations, the third duration may be greater than or equal to a product of the first value and the first duration.

It may be understood that fewer latency conditions may enable the processor to run for a longer time at high performance, so that the processor can respond to more input events in a timely manner. Conversely, more latency conditions may enable more accurate control of a duration for improving processor performance, and on the basis of responding to the input event in a timely manner, problems such as heat generation and poor battery life of the terminal device are alleviated. During actual application, one or more latency conditions may be set based on factors such as overall performance of the terminal device and a use scenario. Certainly, no latency condition may be set. That is, S606 is omitted.

S607: The processor continues running based on the third energy performance preference, and the terminal device extends the target duration of the timer by the first duration.

The timer may be a timer created when the processor is indicated to start to run based on the third energy performance preference. When the timer meets the latency condition, the timer may be obtained, and the target duration of the timer is extended by the first duration, so that the processor continues running based on the third energy performance preference for at least the first duration. That is, the processor remains in high performance at least for the first duration.

S608: Adjust the energy performance preference of the processor to the second energy performance preference if the timer expires.

When the timer expires, the energy performance preference of the processor may be adjusted to the second energy performance preference, to indicate the processor to run based on a higher second energy performance preference, thereby reducing performance of the processor, and alleviating problems such as performance waste, heat generation, and poor battery life.

In this embodiment of this application, when the input event is obtained and the corresponding first energy performance preference is determined, performance of the processor may be adjusted more accurately with reference to the third energy performance preference at which the processor is currently running. When the third energy performance preference is greater than the first energy performance preference, the processor may be indicated to run based on the first energy performance preference, thereby further improving performance of the processor, so that the processor can meet a requirement for responding to the input event. When the third energy performance preference is less than or equal to the first energy performance preference, the processor already runs based on high performance, and therefore, the processor may be indicated to continue running based on the third energy performance preference, thereby maintaining high performance. In addition, when the timer expires, the processor may be indicated to run based on a higher second energy performance preference, thereby alleviating problems such as performance waste, heat generation, and poor battery life.

The following describes in detail the method for adjusting device performance provided in embodiments of this application by using an example in which the terminal device is a PC device and the input device is a touchpad and a keyboard.

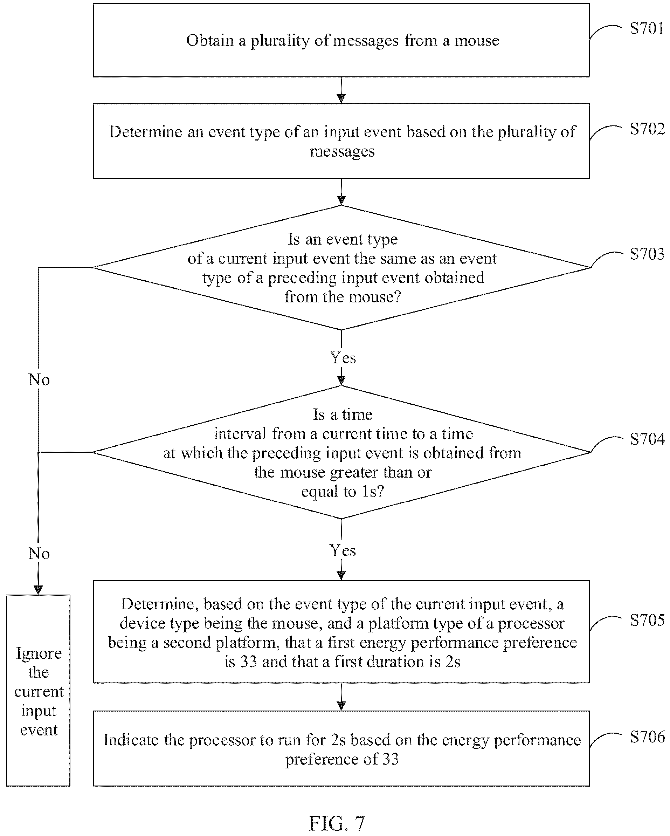

FIG. 7 shows a method for adjusting device performance according to an embodiment of this application. A terminal device is a PC device, and an input device is a mouse. It should be noted that the method is not limited to a specific sequence described in FIG. 7 and below. It should be understood that in another embodiment, a sequence of some steps in the method may be exchanged based on an actual requirement, or some steps in the method may be omitted or deleted. The method includes the following steps.

S701: The terminal device obtains a plurality of messages from the mouse.

The plurality of messages may be messages generated by the mouse based on a user operation, for example, a message indicating left-button press, a message indicating left-button release, a message indicating right-button press, a message indicating right-button release, or a message indicating a press-and-move operation of the mouse.

S702: The terminal device determines an event type of an input event based on the plurality of messages.

The terminal device may determine a corresponding event type based on the received messages and a sequence of the messages.

In some implementations, a message combination corresponding to each of a plurality of event types may be predetermined, so that a message combination received from the mouse is compared with a plurality of stored message combinations. If the message combination is consistent with any stored message combination, it may be determined that an input event of an event type corresponding to the any message combination is obtained.

For example, as shown in the following Table 4, when two messages indicating left-button press and two messages indicating left-button release are obtained, and a time interval between the two messages indicating left-button release is less than 500 ms, it may be determined that an input event of a left-button double-click type is obtained. When a message indicating right-button release is obtained, it may be determined that an input event of a right-button single-click type is obtained. When a message indicating left-button press and a message indicating a press-and-move operation of a left button are obtained, it may be determined that an input event of a dragging type is obtained. When a message indicating wheel scrolling is obtained, it may be determined that an input event of a scrolling type is obtained.

**Table 4**

| Event type | Message combination |
|---|---|
| Left-button double-click | Two WM_LBUTTONDOWN (left-button press)+WM_LBUTTONUP (left-button release) operations, with a time interval between two left-button operations being less than 500 ms |
| Right-button single-click | WM_RBUTTONUP (right-button release) |
| Dragging | WM_LBUTTONDOWN (left-button press)+WM_MOUSEMOVE |
| Scrolling | WM_MOUSEWHEEL |
| ... | ... |

S703: The terminal device determines whether an event type of a current input event is the same as an event type of a preceding input event obtained from the mouse. If the event type of the current input event is the same as the event type of the preceding input event obtained from the mouse, S704 may be performed; or otherwise, the process ends, and the current input event is ignored.

When the event type of the current input event is the same as the event type of the preceding input event obtained from the mouse, the terminal device performs subsequent steps, so that when a same or similar user operation is performed in a scenario in which the user uses the mouse, the terminal device can respond to the user operation in the scenario in a timely manner, thereby improving response efficiency and effect.

In some implementations, S703 may be omitted.

S704: The terminal device determines whether a time interval from a current time to a time at which the preceding input event is obtained from the mouse is greater than or equal to 1s. If the time interval from the current time to the time at which the preceding input event is obtained from the mouse is greater than or equal to 1s, S705 is performed; or otherwise, the process ends, and the current input event is ignored.

Herein, 1s may be the second duration described above.

When determining that the time interval from the current time to the time at which the preceding input event is obtained from the mouse is greater than or equal to 1s, the terminal device continues to perform subsequent steps, so that a problem of repeatedly improving processor performance when the user frequently performs a same or similar user operation can be alleviated.

In some implementations, S704 may be omitted.

S705: The terminal device determines, based on the event type of the current input event, the device type being the mouse, and the platform type of the processor being a second platform, that the first energy performance preference is 33 and that the first duration is 2s.

The terminal device may determine the first energy performance preference to be 33 based on Table 2 in the foregoing, and determine the first duration to be 2s based on Table 3 in the foregoing.

S706: The terminal device indicates the processor to run for 2s based on the energy performance preference of 33.

The terminal device may send the energy performance preference of 33 to the processor, create a timer, and set a target duration of the timer to 2s. The processor may run based on the energy performance preference of 33 and respond to a current input event. In some implementations, when the timer expires, that is, the terminal device runs for 2s based on the energy performance preference of 33, the terminal device may indicate the processor to restore to an original state, for example, restore to continuing to run based on an energy performance preference of 80.

It may be understood that the terminal device responds to the input event in different manners based on different active windows in a display of the terminal device. For example, when any active window is displayed on the display and the user clicks a left button on a minimize button at a top left corner of the active window, the terminal device may minimize the active window. When the user clicks a left button on a close button at the top left corner of the active window, the terminal device may close the active window. When the user knocks twice on a touchscreen with a knuckle, the terminal device may take a screenshot of a current picture on the touchscreen and perform editing. When the user knocks twice on the touchscreen with two knuckles, the terminal device may start screen recording until the user knocks twice on the touchscreen with two knuckles again. When the user swipes up and down along a left edge of the touchscreen, the terminal device may adjust brightness of the touchscreen. When the user swipes up and down along a right edge of the touchscreen, the terminal device may adjust volume of a speaker. When the user swipes up and down along an upper edge of the touchscreen, the terminal device may control fast-forwarding or rewinding of a video played on the touchscreen. When the user swipes inward along the right edge of the touchscreen with three fingers, the terminal device may display a notification center.

In this embodiment of this application, when an input event of the mouse is detected in a scenario in which the user uses the mouse, a corresponding first energy performance preference may be determined in a timely manner, and the processor is indicated to run based on the first energy performance preference, thereby improving response efficiency to the input event. In addition, by determining event types of the current input event and the preceding input event and a time interval between the current input event and the preceding input event, the terminal device can respond a user operation in this scenario in a timely manner when the user performs a same or similar user operation, thereby alleviating a problem of repeatedly improving processor performance when the user frequently performs the same or similar user operation.

For example, the user performs a double-click operation to open an email application. When load is 20%, 60%, and 80%, the processor runs based on energy performance preferences 33, 50, and 70 respectively, and durations for responding to an operation of opening the email application by the user and displaying an interface of the email application are shown in Table 5 below. The event type of the input event is left-button double-click, and the device type is a mouse.

**Table 5**

| Energy performance preference | Response duration (s) | | | | | | | | |
|---|---|---|---|---|---|---|---|---|---|
| | CPU 20% (light load) | | | CPU 60% (medium load) | | | CPU 80% (heavy load) | | |
| 33 | 0.44 | 0.85 | 1.09 | 1.75 | 1.33 | 0.78 | 1.48 | 1.65 | 1.45 |
| 50 | 1.16 | 1.39 | 0.93 | 1.36 | 2.41 | 1.37 | 1.72 | 8.98 | 7.98 |
| 70 | 2.34 | 2.25 | 2.13 | Lag and no response | | | Lag and no response | | |

First four columns of data in Table 5 are used as examples. When the load of the processor is 20%, three tests are performed on a response duration for opening the email application by the user. When the first energy performance preference is 33, durations for the terminal device to respond to the operation of opening the email application by the user and display the interface of the email application are 0.44s, 0.85s, and 1.09s respectively. When the first energy performance preference is 50, durations for the terminal device to respond to the operation of opening the email application by the user and display the interface of the email application are 1.16s, 1.39s, and 0.93s respectively. When the first energy performance preference is 70, durations for the terminal device to respond to the operation of opening the email application by the user and display the interface of the email application are 2.34s, 2.25s, and 2.13s respectively. It may be learned that, regardless of whether the processor is under light, medium, or heavy load, when a value of the first energy performance preference is smaller, a duration for responding to the operation of opening the email application by the user and displaying the interface of the email application is shorter, indicating a greater improvement in performance of the processor.

For example, the user performs a right-button single-click operation to open a shortcut menu. When load is 20%, 60%, and 80%, the processor runs based on energy performance preferences 33, 50, and 70 respectively, and durations for responding to an operation of opening the shortcut menu and displaying the shortcut menu are shown in Table 6 below. The event type of the input event is right-button single-click, and the device type is a mouse.

**Table 6**

| Energy performance preference | Response duration (s) | | | | | | | | |
|---|---|---|---|---|---|---|---|---|---|
| | CPU 20% (light load) | | | CPU 60% (medium load) | | | CPU 80% (heavy load) | | |
| 33 | 0.41 | 0.52 | 0.52 | 0.4 | 0.46 | 0.46 | 0.44 | 0.49 | 0.51 |
| 50 | 0.49 | 0.53 | 0.49 | 0.57 | 0.65 | 0.59 | 0.63 | 0.72 | 0.63 |
| 70 | 0.55 | 0.55 | 0.55 | 0.75 | 0.9 | 0.91 | 1.1 | 1.1 | 1.3 |

First four columns of data in Table 5 are used as examples. When the load of the processor is 20%, three tests are performed on a response duration for opening the shortcut menu by the user through right-button single-click. When the first energy performance preference is 33, durations for the terminal device to respond to the right-button single-click operation of opening the shortcut menu by the user and display the shortcut menu are 0.41s, 0.52s, and 0.52s respectively. When the first energy performance preference is 50, durations for the terminal device to respond to the right-button single-click operation of opening the shortcut menu by the user and display the shortcut menu are 0.49s, 0.53s, and 0.49s respectively. When the first energy performance preference is 70, durations for the terminal device to respond to the right-button single-click operation of opening the shortcut menu by the user and display the shortcut menu are 0.55s, 0.555s, and 0.55s respectively. It may be learned that, when a value of the first energy performance preference is smaller, a duration for responding to the right-button single-click operation of opening the shortcut menu by the user and displaying the shortcut menu is shorter, indicating a greater improvement in performance of the processor.

For example, the user scrolls a middle mouse button. When load is 20%, 60%, and 80%, the processor runs based on energy performance preferences 33, 50, and 70 respectively, and frame rates for responding to the user scrolling the middle button through a 2000-row table in a spreadsheet application are shown in Table 7. The event type of the input event is middle button scrolling, and the device type is a mouse.

**Table 7**

| Energy performance preference | Frame rate (Frame/s) | | |
|---|---|---|---|
| | CPU 20% (light load) | CPU 60% (medium load) | CPU 80% (heavy load) |
| 33 | 18 | 10 | 8 |
| 50 | 15 | 13 | 6 |
| 70 | 16 | Lag and no response | Lag and no response |

It may be learned from Table 7 that, when a value of the first energy performance preference is smaller, a frame rate for the terminal device to respond to the user scrolling the middle mouse button to display a spreadsheet is higher, indicating a greater improvement in performance of the processor.

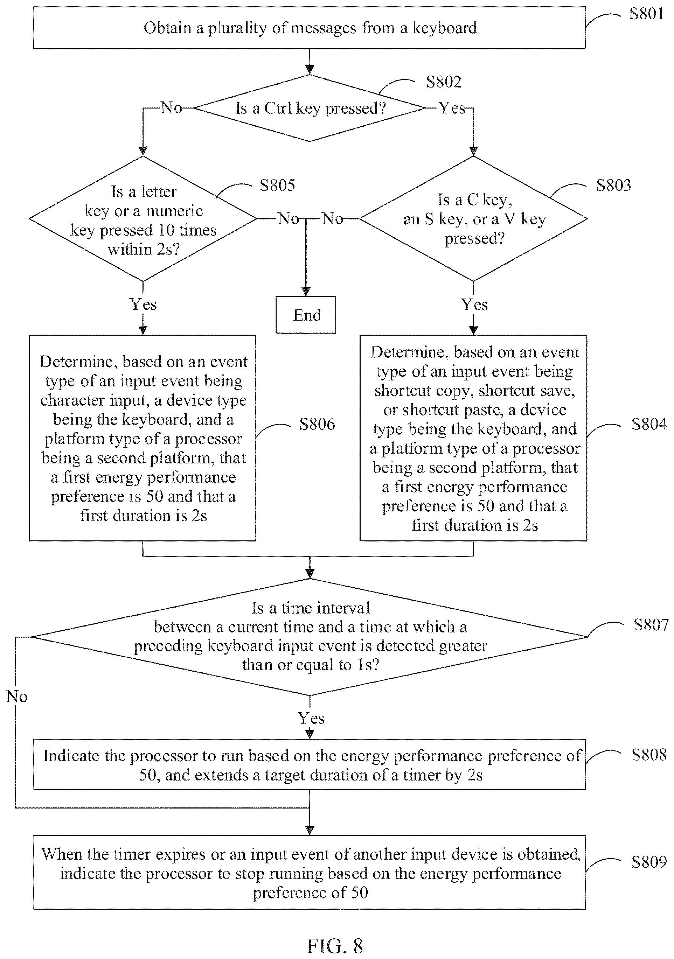

FIG. 8 shows a method for adjusting device performance according to an embodiment of this application. A terminal device is a PC device, and an input device is a keyboard. It should be noted that the method is not limited to a specific sequence described in FIG. 8 and below. It should be understood that in another embodiment, a sequence of some steps in the method may be exchanged based on an actual requirement, or some steps in the method may be omitted or deleted. The method includes the following steps.

S801: The terminal device obtains a plurality of messages from the keyboard.

The plurality of messages may be messages generated by the keyboard based on a user operation. In some implementations, the message may include a virtual key code corresponding to a key pressed by the user.

For example, according to an alphabetical order from A to Z, virtual key codes corresponding to letter keys are 65 to 90; and according to a numerical order from 1 to 9, virtual key codes corresponding to numeric keys may be messages 48 to 57.

S802: The terminal device determines whether the user presses a Ctrl key. If the user presses the Ctrl key, perform S803; or otherwise, perform S805.

When a message of pressing the Ctrl key is obtained, it may be determined that the user presses the Ctrl key. In some implementations, a flag corresponding to the Ctrl key may be set to true when the Ctrl key is pressed.

S803: The terminal device determines whether the user presses a C key, an S key, or a V key, and if the user presses the C key, the S key, or the V key, S804 is performed; or otherwise, the process ends.

When a message of pressing the C key is obtained, it may be determined that the user presses the C key. When a message of pressing the S key is obtained, it is determined that the user presses the S key. When a message of pressing the V key is obtained it is determined that the user presses the V key.

S804: The terminal device determines, based on an event type of an input event being shortcut copy, shortcut save, or shortcut paste, a device type being the keyboard, and a platform type of a processor being a second platform, that a first energy performance preference is 50 and that a first duration is 2s.

When the flag corresponding to the Ctrl key is true and the message of pressing the C key is received, it may be determined that the input event of the shortcut copy type is obtained. When the flag corresponding to the Ctrl key is true and the message of pressing the S key is received, it may be determined that the input event of the shortcut save type is obtained. When the flag corresponding to the Ctrl key is true and the message of pressing the V key is received, it may be determined that the input event of the shortcut paste type is obtained.

The terminal device may determine the first energy performance preference to be 50 based on Table 2 in the foregoing and determine the first duration to be 2s based on Table 3 in the foregoing.

S805: The terminal device determines whether the user presses a letter key or a numeric key 10 times within 2s. If the user presses the letter key or the numeric key 10 times within 2s, S806 is performed; or otherwise, the process ends.

Herein, a message queue with a length of 10 may be created. Each time a message indicating character key press is received, it is determined whether a time interval between a last message and a first message in the message queue is less than 2s. If the time interval between the last message and the first message in the message queue is less than 2s, it is determined that an input event of the character input type is obtained; or otherwise, the first message is removed and an eleventh message is inserted.

S806: The terminal device determines, based on an event type of an input event being character input, a device type being the keyboard, and a platform type of a processor being a second platform, that a first energy performance preference is 50 and that a first duration is 2s.

The terminal device may determine the first energy performance preference to be 50 based on Table 2 in the foregoing, and determine the first duration to be 2s based on Table 3 in the foregoing.

S807: The terminal device determines whether a time interval between a current time and a time at which a preceding keyboard input event is detected is greater than or equal to 1s. If the time interval between the current time and the time at which the preceding keyboard input event is detected is greater than or equal to 1s, S808 is performed; or otherwise, S809 is performed.

Herein, 1s may be the second duration described above.

When determining that the time interval between the current time and the time at which the preceding keyboard input event is detected is greater than or equal to 1s, the terminal device continues to perform subsequent steps, so that a problem of repeatedly improving processor performance when the user frequently performs a same or similar user operation can be alleviated.

S808: The terminal device indicates the processor to run based on the energy performance preference of 50, and extends a target duration of a timer by 2s.

S809: When the timer expires or an input event of another input device is obtained, indicate the processor to stop running based on the energy performance preference of 50.

In some implementations, when the timer expires, it indicates that the user temporarily does not input information to the terminal device by using the keyboard. The terminal device may indicate the processor to restore to an initial state, for example, may indicate the processor to restore to running based on an energy performance preference of 70.

In some implementations, when an input event of another input device is obtained, it indicates that the user temporarily does not input information to the terminal device by using the keyboard, and switches to inputting information to the terminal device by using the another input device. The terminal device may determine a new first energy performance preference based on the input event of the another input device, and indicate the processor to run based on the new first energy performance preference.

In this embodiment of this application, when an input event of the keyboard is detected in a scenario in which the user uses the keyboard, a corresponding first energy performance preference may be determined in a timely manner, and the processor is indicated to run based on the first energy performance preference, thereby improving response efficiency to the input event. In addition, the time interval between the current time and the time at which the preceding keyboard input event is detected can alleviate a problem of repeatedly improving processor performance when the user frequently performs a same or similar user operation.

For example, the user inputs a segment of text by using the keyboard. Responses of the terminal device in different power supply modes may be shown in Table 8. The event type of the input event may be character input, and the device type may be a keyboard.

**Table 8**

| Energy performance preference | Power supply mode | Smoothness |
|---|---|---|
| 70 | Optimal energy efficiency | Obvious lag |
| 50 | Optimal energy efficiency | Slight lag |
| 70 | Balanced mode | Slight lag |
| 50 | Balanced mode | Smooth |

In Table 8, when the terminal device is in the optimal energy efficiency mode, the terminal device may preferentially reduce energy consumption, and therefore the terminal device may have low power consumption and low performance. When the terminal device is in the balanced mode, the terminal device may ensure performance to some extent while reducing energy consumption, and therefore the terminal device may have high energy consumption and high performance. It may be learned from Table 8 that, in a same power supply mode, a smaller energy performance preference indicates a higher response speed to character input.

For example, the user opens a spreadsheet application and performs shortcut copy, shortcut paste, and shortcut save in the spreadsheet application using the keyboard. Responses of the terminal device may be shown in Table 9. The event type of the input event may be shortcut command input, and the device type may be a keyboard.

**Table 9**

| Energy performance preference | Table rows*columns | Time for opening (ms) | Time for shortcut paste (ms) | Time for shortcut save (ms) |
|---|---|---|---|---|
| 70 | 1000*2000 | 23600 | 4400 | 18700 |
| 50 | 1000*2000 | 16100 | 3000 | 11000 |
| 33 | 1000*2000 | 13500 | 2900 | 11000 |

It may be learned from Table 9 that, in a case of a table of a same size, when an energy performance preference is smaller, a duration consumed for table opening, table shortcut paste, and table shortcut save is smaller.

In this embodiment of this application, a method for adjusting an energy performance preference of a processor based on an input event of a terminal device is provided. During actual application, the method may be independently used to adjust the performance of the processor, or may be combined with another method for adjusting performance of the terminal device. In some implementations, a current scenario of the terminal device, such as an idle scenario or a music scenario, may be identified, performance of the terminal device is adjusted based on the scenario, and an energy performance preference of the processor is adjusted according to the method provided in this embodiment of this application. In some implementations, a current scenario of the terminal device may be identified, and an energy performance preference of the processor is adjusted according to the method provided in this embodiment of this application only when the terminal device is in a specific scenario. In some implementations, a current window or process of the terminal device may be identified, and an energy performance preference of the processor is adjusted according to the method provided in this embodiment of this application only when the current window is a specific window or the current process is a specific process.

Based on a same inventive concept, an embodiment of this application further provides an apparatus for adjusting device performance. The apparatus includes an obtaining module, a determining module, and an adjustment module.

The obtaining module is configured to obtain an input event for a terminal device.

The determining module is configured to determine a first energy performance preference corresponding to the input event.

The adjustment module is configured to adjust an energy performance preference of a processor in the terminal device to the first energy performance preference.

The apparatus may be equivalent to the terminal device, or the apparatus may be disposed in the terminal device, or the terminal device may be connected to the apparatus, and the apparatus may implement operations performed by the terminal device in the foregoing embodiments, and has corresponding technical effects.

Based on a same inventive concept, an embodiment of this application further provides a terminal device. The terminal device includes a memory and a processor. The memory is configured to store a computer program. The processor is configured to perform the method in the foregoing method embodiment when invoking the computer program.

The terminal device provided in this embodiment may perform the foregoing method embodiment. An implementation principle and technical effects thereof are similar to those of the foregoing method embodiment. Details are not described herein again.

Based on a same inventive concept, an embodiment of this application further provides a chip system. The chip system includes a processor. The processor is coupled to a memory. The processor executes a computer program stored in the memory, to implement the method in the foregoing method embodiment.

The chip system may be a single chip or a chip module including a plurality of chips.

An embodiment of this application further provides a computer-readable storage medium. The computer-readable storage medium stores a computer program. When the computer program is executed by a processor, the method in the foregoing method embodiment is implemented.

An embodiment of this application further provides a computer program product. When the computer program product is run on a terminal device, the terminal device is enabled to implement the method in the foregoing method embodiment.

When the foregoing integrated unit is implemented in the form of a software functional unit and sold or used as an independent product, the integrated unit may be stored in a computer-readable storage medium. Based on such an understanding, all or some of the procedures of the methods in the foregoing embodiments of this application may be implemented by a computer program instructing related hardware. The computer program may be stored in a computer-readable storage medium. When the computer program is executed by a processor, the steps in the foregoing method embodiment may be implemented. The computer program includes computer program code, and the computer program code may be in a source code form, an object code form, an executable file, an intermediate form, or the like. The computer-readable storage medium may include at least any entity or apparatus that can carry the computer program code to a photographing apparatus/terminal device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disc.

In the foregoing embodiments, descriptions of each embodiment have respective focuses. For a part that is not described in detail or recorded in an embodiment, refer to related descriptions in other embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed apparatus/device and method may be implemented in other manners. For example, the described apparatus/device embodiment is merely an example. For example, division of the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses, or units, and may be in electrical, mechanical, or other forms.

It should be understood that, when used in the specification and the appended claims of this application, the term "include" indicates presence of the described features, entireties, steps, operations, elements, and/or components, but does not exclude presence or addition of one or more other features, entireties, steps, operations, elements, components, and/or sets thereof.

It should be further understood that the term "and/or" used in the specification and the appended claims of this application refers to one of the items listed correlatively or any combination and all possible combinations of the items, and includes these combinations.

As used in the specification of this application and the appended claims, the term "if" may be interpreted, depending on the context, as "when" or "once" or "in response to determining" or "in response to detecting". Similarly, the phrase "if it is determined" or "if [a described condition or event] is detected" may be interpreted, depending on the context, to mean "once it is determined that" or "in response to determining" or "once [a described condition or event] is detected" or "in response to detecting [described condition or event]".

In addition, in the descriptions of the specification and the appended claims of this application, the terms "first", "second", "third", and the like are merely used for distinguishing descriptions, but cannot be understood as indicating or implying relative importance.

Reference to "one embodiment" or "some embodiments" described in the specification of this application means that one or more embodiments of this application include a specific feature, structure, or feature described with reference to the embodiment. Therefore, statements such as "in an embodiment", "in some embodiments", "in some other embodiments", and "in other embodiments" that appear at different places in this specification do not necessarily mean a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

Finally, it should be noted that the foregoing embodiments are merely intended for describing the technical solutions of this application rather than limiting this application. Although this application is described in detail with reference to the foregoing embodiments, a person of ordinary skill in the art should understand that modifications can still be made to the technical solutions described in the foregoing embodiments or equivalent replacements can be made to some or all technical features thereof. These modifications or replacements do not make the essence of the corresponding technical solutions depart from the scope of the technical solutions of embodiments of this application.

## Claims

1. A method for adjusting device performance, comprising:
obtaining an input event for a terminal device;
determining a first energy performance preference corresponding to the input event; and
adjusting an energy performance preference of a processor in the terminal device to the first energy performance preference.

2. The method according to claim 1, wherein determining the first energy performance preference corresponding to the input event comprises:
determining at least one of an event type of the input event and device information of an input device, wherein the input device corresponds to the input event; and
determining the first energy performance preference based on at least one of the event type and the device information of the input device.

3. The method according to claim 2, further comprising:
determining a platform type of the processor; and
determining the first energy performance preference based on at least one of the event type and the device information of the input device comprises:
determining the first energy performance preference based on the platform type and at least one of the event type and the device information of the input device.

4. The method according to any one of claims 1 to 3, wherein before adjusting the energy performance preference of the processor in the terminal device to the first energy performance preference, the method further comprises:
obtaining a temperature of the processor; and
updating the first energy performance preference based on the temperature to obtain an updated first energy performance preference, wherein when the temperature is lower, the updated first energy performance preference is smaller; and
adjusting the energy performance preference of the processor in the terminal device to the first energy performance preference comprises:
adjusting the energy performance preference of the processor in the terminal device to the updated first energy performance preference.

5. The method according to any one of claims 1 to 4, further comprising:
determining a first duration corresponding to the input event; and
adjusting the energy performance preference of the processor to a second energy performance preference when the processor runs for at least the first duration based on the first energy performance preference, wherein the second energy performance preference is greater than the first energy performance preference.

6. The method according to claim 5, wherein determining the first duration corresponding to the input event comprises:
determining at least one of the event type of the input event and the device information of the input device, wherein the input device corresponds to the input event; and
determining the first duration based on at least one of the event type and the device information of the input device.

7. The method according to claim 5 or 6, wherein before adjusting the energy performance preference of the processor in the terminal device to the first energy performance preference, the energy performance preference of the processor is a third energy performance preference, and the third energy performance preference is greater than the first energy performance preference; and adjusting the energy performance preference of the processor to the second energy performance preference when the processor runs for at least the first duration based on the first energy performance preference comprises:
creating a timer when the processor starts to run based on the first energy performance preference;
setting a target duration of the timer to the first duration; and
adjusting the energy performance preference of the processor to the second energy performance preference if the timer expires.

8. The method according to claim 5 or 6, wherein before adjusting the energy performance preference of the processor in the terminal device to the first energy performance preference, the energy performance preference of the processor is a third energy performance preference, and the third energy performance preference is less than or equal to the first energy performance preference; and adjusting the energy performance preference of the processor to the second energy performance preference when the processor runs for at least the first duration based on the first energy performance preference comprises:
obtaining a timer, wherein the timer is a timer created when the processor starts to run based on the third energy performance preference;
extending a target duration of the timer by the first duration; and
adjusting the energy performance preference of the processor to the second energy performance preference if the timer expires.

9. The method according to claim 8, wherein before extending the target duration of the timer by the first duration, the method further comprises:
determining that the timer meets a latency condition, wherein the latency condition comprises at least one of the following:
a time interval from a current time to a most recent extension of the target duration in history is greater than or equal to a second duration;
a quantity of times of extending the target duration is greater than or equal to a first value; or
the target duration is greater than or equal to a third duration.

10. A terminal device, comprising a memory and a processor, wherein the memory is configured to store a computer program, and the processor is configured to invoke the computer program to perform the method according to any one of claims 1 to 9.

11. The terminal device according to claim 10, wherein the terminal device is a personal computing device, a tablet device, or smart glasses.

12. The terminal device according to claim 11, wherein when the terminal device is the personal computing device or the tablet device, the input device comprises at least one of a keyboard, a touchpad, a mouse, and a touchscreen.

13. A computer-readable storage medium, storing a computer program, wherein when the computer program is executed by a processor, the method according to any one of claims 1 to 9 is implemented.

14. A computer program product, wherein when the computer program product is run on a terminal device, the terminal device is enabled to perform the method according to any one of claims 1 to 9.
